# EUROPÄISCHE PATENTANMELDUNG

(11) **EP 0 970 882 A1**
(43) Veröffentlichungstag der Anmeldung: **12.01.2000**
(21) Anmeldenummer: 99810598.5
(22) Anmeldetag: 06.07.1999
(51) Int. Cl.: B62K 21/12, B62K 21/26

(54) **Lenkstange für ein Zweiradfahrzeug**

(30) Priorität: 07.07.1998 CH 144498
(71) Anmelder: Novoa, Luis, 2557 Studen (CH)
(72) Erfinder: Novoa, Luis, 2557 Studen (CH)
(74) Vertreter: AMMANN PATENTANWAELTE AG BERN

(57) **Zusammenfassung**

Eine Lenkstange (10) für ein Zweiradfahrzeug, insbesondere ein "Montain Bike", besteht in wesentlichen aus einem Profil (11), das eine breite Auflagefläche (26) für die Hände eines Zweiradfahrers aufweist. Bevorzugt ist weiterhin auch die Form der anschliessenden Bereiche (25, 24) für das Umgreifen mit den Fingern bzw. dem Daumen ergonomisch angepasst. Für die Fingerspitzen sind insbesondere eine Griffnut (20) und zusätzlich eine Griffkante (33) vorgesehen, die an einem übergeschobenen Handgriff (14) ausgebildet ist. Bremshebel etc können in Befestigungsnuten (21.1, 22.1) befestigt werden, in die auch Haltestege (27, 28) der Handgriffe eingeschoben werden können, um diese verdrehsicher an der Lenkstange zu befestigen.

## Beschreibung

Die Erfindung betrifft eine Lenkstange für ein Zweiradfahrzeug entsprechend dem Oberbegriff von Anspruch 1.

Lenkstangen für Zweiradfahrzeuge sind bekannt. Bei Geländefahrrädern, sogenannte Mountain Bikes, sind die Lenkstangen wenig gekrümmt und bestehen im allgemeinen aus Rohrmaterial mit kreisförmigen Querschnitt, der im Mittelbereich aus Stabilitätsgründen vergrössert sein kann.

Aus ergonomischen Gründen besteht ein Bedürfnis für eine Lenkstange, die besser an die menschliche Anatomie, insbesondere an die Form und Funktion der menschlichen Hand und ihrer Finger bei allen Situationen der Fahrzeugbenutzung angepasst ist. Es ergibt sich hieraus die Aufgabe, eine solche Lenkstange zu schaffen, wobei diese selbstverständlich allen bekannten Anforderungen an Lenkstangen bezüglich Stabilität, Führungssicherheit, Preis usw. genügen muss.

Die Lösung dieser Aufgabe wird durch den kennzeichnenden Teil von Anspruch 1 angeben. Die abhängigen Ansprüche geben Ausgestaltungen und Varianten der Lösung an.

Im folgenden wird die Erfindung anhand eines Ausführungsbeispiels unter Bezugnahme auf Figuren näher beschrieben. Es zeigen:
- Figur 1:: Lenkstange von oben,
- Figur 2:: Lenkstange von unten,
- Figur 3:: Querschnitt durch die Lenkstange im Bereich eines Handgriffs,
- Figur 4:: Befestigung eines Bremsgriffs an der Lenkstange,
- Figur 5:: alternative Befestigung eines Bremsgriffs, und
- Figur 6:: Befestigung der Lenkstange an der Lenkachse,

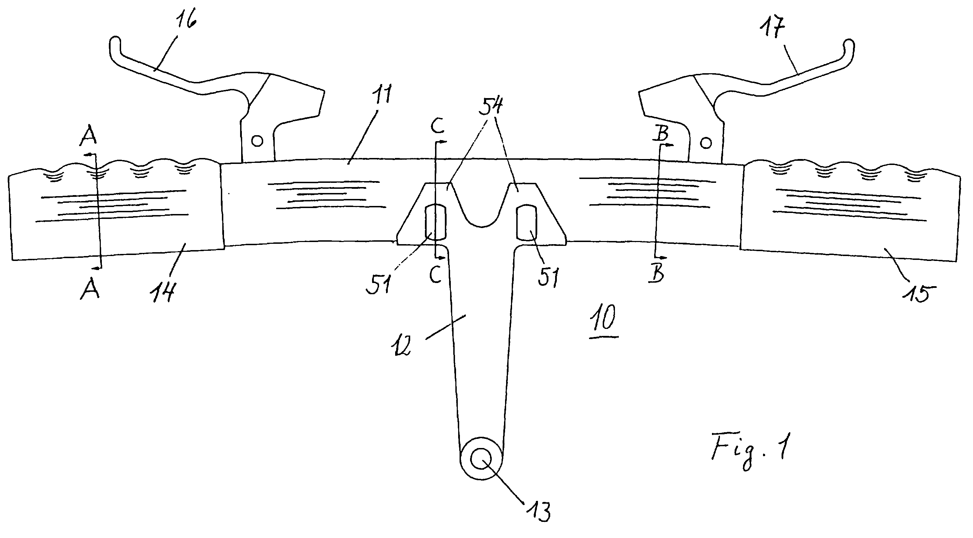

Figur 1 zeigt in Aufsicht eine Lenkstange 10 für ein Zweiradfahrzeug, insbesondere für ein Geländefahrrad (Mountain Bike). Diese Lenkstange umfasst ein tragendes, längliches bzw. vorwiegend eindimensionales, zweifach schwach gekrümmtes Hohlprofilelement 11. Dieses ist in seiner Mitte mit einem Vorbauhebel 12 verbunden, über den es in konventioneller Weise an der Lenkachse 13 befestigt ist. An den beiden seitlichen Enden des Holprofilelements 11 sind Handgriffe 14, 15 auf das Element 11 aufgezogen, die aus weicherem, rutschfesten Material, beispielsweise Gummi, bestehen. Den Handgriffen 14, 15 sind in üblicher Weise zwei Bremshebel 16, 17 so zugeordnet, dass diese ergonomisch einwandfrei vom Fahrer manuell betätigbar sind.

Figur 2 zeigt die Lenkstange 10 von unten. In dieser Ansicht zeigt sich eine Griffnut 20, die sich über die ganze Länge des Hohlprofilelements 11 erstreckt. Diese Griffnut 20 dient vor allem zur Aufnahme der Fingerspitzen des Fahrers. Weiter zeigen sich an den Enden des Elements 11 jeweils zwei zueinander parallele, nach aussen offene Befestigungsnuten 21.1, 22.1 und 21.2, 22.2, die zur Befestigung der Handgriffe 14, 15 und der Bremshebel 16, 17 dienen.

Figur 3 zeigt einen Schnitt quer durch die Lenkstange 10 im Bereich des Handgriffs 14, das heisst entsprechend der Schnittlinie AA von Figur 1. Das Hohlprofilelement 11 weist einen geometrisch unregelmässigen Querschnitt auf, der sich grob in zwei miteinander verbundene und von der Elementwandung 23 gemeinsam umgebene Teilbereiche 24, 25 aufteilen lässt. Der erste Teilbereich 24 ist im wesentlichen oval geformt, und seine Längsachse ist im wesentlichen vertikal ausgerichtet. Der zweite Teilbereich 25 ist im wesentlichen parallelflächig ausgebildet und in etwa horizontal ausgerichtet. Die Teilbereiche 24, 25 sind so miteinander verbunden, dass die oben liegende Aussenfläche des Elements 11 eine relativ breite und flache Auflagefläche 26 bildet, die ergonomisch an die menschliche Mittelhand angepasst ist und die somit die Hände und Arme des Fahrers bequem abstützen kann. Diese Auflagefläche, die hier konkav ausgeführt ist, kann auch eben oder konvex sein. Im letzteren Fall stellt sie eine Biegung von höchstens 40° dar.

Die aus Figur 2 bereits bekannten Befestigungsnuten 21.1, 22.1 sind an den Unterseiten der beiden Teilbereiche 24, 25 in die Elementwanderung 23 integriert. Die Nuten 22.1, 22.1 sind parallel zueinander, nach unten offen und weisen ein Schwalbenschwanzprofil auf.

Zwischen den Nuten 21.1, 22.1 ist der Handgriff 14 so aufgespannt, dass er die Auflagefläche 26 bedeckt. Hierzu ist der Handgriff 14 als im wesentlichen flächiges Teil ausgebildet, dass an zwei einander gegenüberliegenden Seiten zwei zueinander parallele, keilförmige Haltestege 27, 28 aufweist. Diese Stege 27, 28 sind in die Befestigungsnuten 21.1 bzw. 22.1 einfügbar, beispielsweise durch Einschieben von der Seite her. Zum Ausgleich von Toleranzen können die Stege 27, 28 mit Hohlbereichen 29, 30, beispielsweise durchgehenden Luftkammern, versehen sein.

Im Bereich des Haltesteges 28 weist der Handgriff 14 noch eine Griffkante 33 auf, um die herum die Finger des Fahrers in die sich insgesamt ergebende, aus Figur 2 bereits bekannte Griffnut 20 eingreifen können.

Die Lenkstange 10 ist sehr stabil und entspricht ergonomischen Gesichtspunkten. Sie bietet eine bequeme Auflagefläche 26 für die Hände des Fahrers und eine griffige Zugkante für die Finger in steil ansteigendem Gelände. Bei einem Sturz besteht verminderte Verletzungsgefahr wegen der relativ sanften Gesamtform der Lenkstange 10.

Figur 4 zeigte einen zweiten Schnitt längs der Schnittlinie BB von Figur 1 durch die Lenkstange 10 und eine Seitenansicht des an dieser befestigten Bremshebels 17. Diese Befestigung erfolgt über die Befestigungsnuten 21.2, 22.2, in die ein Befestigungsblock 35 mit zwei Gabelbeinen 36, 37 und keilförmigen Fussbereichen seitlich von aussen her eingeschoben und in der geeigneten Position fixiert ist. An diesem Block 35 sind der eigentliche Bremshebel und die nicht gezeigten Bremsbedienungselemente wie Kabelzug oder Hydraulikrohr in konventioneller Weise befestigt.

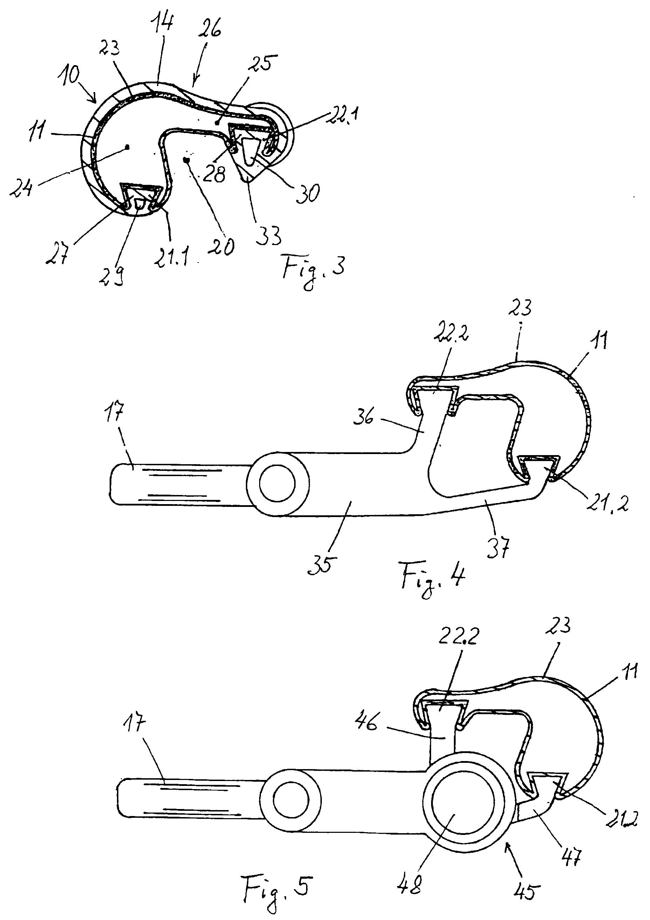

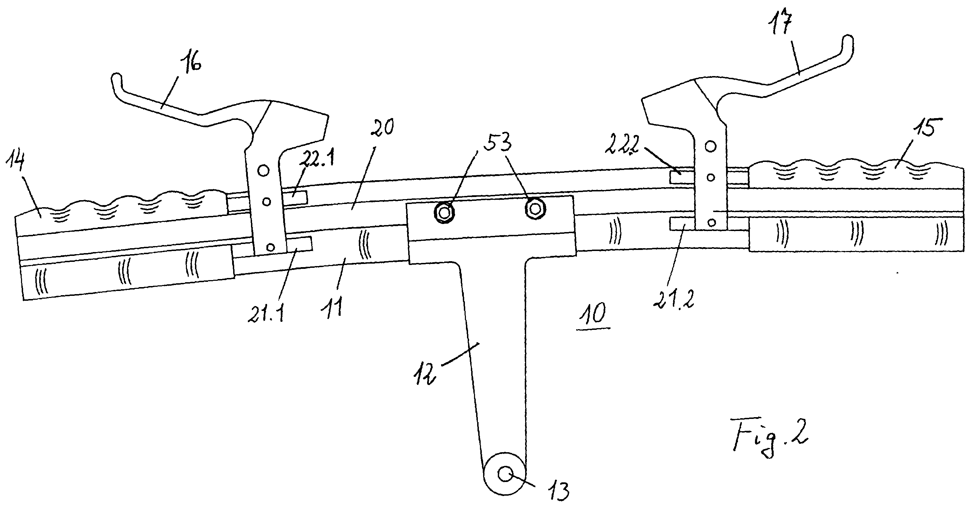

Figur 5 zeigt als Alternative zur Anordnung von Figur 4 ein Zwischenstück 45 mit Gabelbeinen 46, 47, die in den Befestigungsnuten 22.2 bzw. 21.2 fixiert sind. Am Zwischenstück 45 ist ein zylindrischer Ansatz 48 in Richtung der Nuten 21.2, 22.2 angeordnet, an dem ein konventioneller Bremshebelsatz, wie er für zylindrische Lenkstangen kommerziell erhältlich ist, auschraubbar ist.

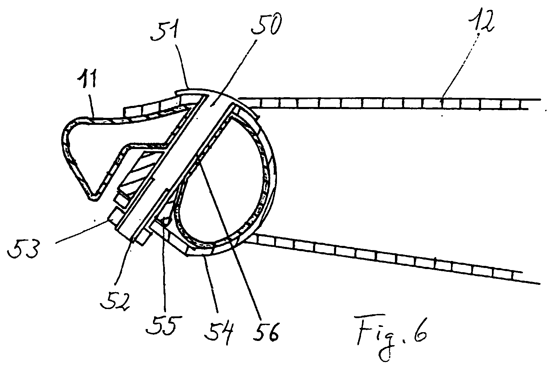

Figur 6 zeigt einen Schnitt entsprechend der Schnittlinie CC von Figur 1. Das Hohlprofilelement 11 weist eine schräge Bohrung auf, durch die ein Schraubbolzen 50 mit oben liegendem Kopf 51 und unten liegendem Gewinde 52 gesteckt ist. Dieser Bolzen 50 verbindet einen etwa halbkreisförmigen Ansatz 54 des Vorbauhebels 12 mit der Lenkstange 10 und fixiert diese Teile mittels der Schraubmutter 53. Zur Stabilisierung dient dabei ein Einsatzstück 55, das in die Griffnut 20 eingefügt ist. Die Bohrung ist durch eine zylindrische Stützwand 56 abgestützt, so dass das Hohlprofilelement 11 beim Anziehen der Schraubbolzen nicht zusammengedrückt wird.

Entsprechend den Figuren 1 und 2 ist dieser Aufbau doppelt vorhanden, um die erforderliche Stabilität der Verbindung zu gewährleisten. Ähnlich lässt sich die Lenkstange 10 auch direkt, dass heisst ohne Vorbauhebel 12, mit der Lenkachse 13 verbinden.

Das Hohlprofilelement 11 ist bevorzugt aus Metall, beispielsweise aus einer Aluminiumlegierung im Profilziehverfahren herstellbar. Es lässt sich aber auch aus anderem Material, beispielsweise aus faserverstärktem Kunststoff herstellen. Im Inneren des Elements 11 lassen sich Verstärkungsstege anbringen oder das Element 11 kann ausgeschäumt werden. Die Befestigungsnuten 21.1, 21.2, 22.1, 22.2 können über die ganze Länge des Hohlprofilelements 11 verlaufen oder wie in Figur 2 gezeigt nur im Bereich der Handgriffe 14, 15 ausgebildet sein. Die Nuten 21.1, 21.2, 22.1, 22.2 können weiter mehr oder weniger tief in das Innere des Elements 11 eingreifen. Sie können auch als separate Teile ausgebildet sein, die mit dem Hohlprofilelement 11 starr verbunden sind. Ihre örtliche Anordnung lässt sich abweichend von der Darstellung in Figur 3 variieren. Insbesondere die Nut 21.1, 21.2 lässt sich in die Flanke der Griffnut 20 integrieren.

Ausser den bereits erwähnten ergonomischen Vorteilen der erfindungsgemässen Lenkstange 10 ergibt sich als weiterer Vorteil die verdrehsichere Befestigung der Handgriffe 14, 15 und die stabile Verankerung der Aufhängung der Bremshebel 16, 17.

Varianten des dargestellten Ausführungsbeispiels sind dem Fachmann zugänglich, ohne den Rahmen der Erfindung zu verlassen. So ist es denkbar, statt eines Hohlprofils 11 auch ein Vollprofil zu verwenden.

## Patentansprüche

1. Lenkstange (10) für ein Zweiradfahrzeug, insbesondere ein Fahrrad und besonders bevorzugt ein "Mountain Bike", umfassend
ein tragendes, überwiegend eindimensionales, bevorzugt in einer Ebene liegendes, Profil (11), das mittig direkt oder indirekt mit der Lenkachse (13) des Fahrzeugs verbindbar ist,
dadurch gekennzeichnet, dass
der Querschnitt des Profils (11) einen ersten Bereich aufweist, der insgesamt eben ist, konkav gekrümmt ist oder wesentlich schwächer als die durchschnittliche Krümmung des Querschnitts konvex gekrümmt ist, um eine verbreiterte Auflagefläche (26) für die Hand des Benutzers des Fahrzeugs zu schaffen.

2. Lenkstange (10) gemäss Anspruch 1, dadurch gekennzeichnet, dass der erste Bereich im wesentlichen eine konvexe Biegung von höchstens 40° darstellt.

3. Lenkstange (10) gemäss Anspruch 1 oder 2, dadurch gekennzeichnet, dass ein zweiter, sich an den ersten Bereich in eine erste Richtung anschliessender, bevorzugt eine Biegung von 60° bis 180° darstellender, zweiter Bereich des Querschnitts einen ersten Abschnitt mit wesentlich stärkerer Krümmung aufweist, an den sich in die erste Richtung ein zweiter Abschnitt gegenläufiger Krümmung anschliesst, um eine mit den Fingern eines Benutzers des Fahrzeugs umgreifbare Vorderkante mit anschliessender Griffnut zur Aufnahme der Fingerspitzen bilden, die insbesondere bei Ermüdung besseren Halt für die Finger zu gewährleisten.

4. Lenkstange (10) gemäss einem der Ansprüche 1 bis 3, dadurch gekennzeichnet, dass sich in die der ersten Richtung entgegengesetzte, zweite Richtung an den ersten Bereich ein dritter Bereich anschliesst, der bevorzugt im wesentlichen eine Biegung von 180° bis 270° darstellt und der eine gegenüber dem ersten Bereich stärkere Krümmung aufweist, um eine vom Daumen eines Benutzers des Fahrzeugs umfasst werden zu können.

5. Lenkstange (10) gemäss einem der Ansprüche 1 bis 4, dadurch gekennzeichnet,
- dass das Profil (11) einen geometrisch unregelmässigen Querschnitt aufweist, und
- dass wenigstens eine Befestigungsnut (21.1, 21.2, 22.1, 22.2), bevorzugt mit Schwalbenschwanzprofil, vorgesehen ist, die an den Enden des Profils (11) offen ist und sich in Längsrichtung des Profils (11) erstreckt, um an den Enden Handgriffe (14; 15) aufschieben zu können und/oder Betätigungsmittel (16, 17), wie Brems- und Schalthebel und/oder Befestigungsadapter für Betätigungshebel, in die Nut einschieben und/oder in der Nut befestigen zu können.

6. Lenkstange gemäss Anspruch 5, dadurch gekennzeichnet,
dass zwei Nuten (21.1, 22.1; 21.2, 22.2) vorgesehen sind, die in die Wandung (23) des Profils (11) integriert sind.

7. Lenkstange gemäss einem der Ansprüche 5 bis 6, dadurch gekennzeichnet,
dass die Nuten (21.1, 22.1; 21.2, 22.2) nur im Bereich der Handgriffe (14, 15) und der Bremshebel (16, 17) jedoch nicht im Mittelbereich des Profils (11) in dessen Wandung (23) integriert sind.

8. Lenkstange gemäss einem der Ansprüche 1 bis 7, dadurch gekennzeichnet,
dass der Querschnitt des Profils (11) im wesentlichen zwei miteinander verbundene Teilbereiche (24, 25) aufweist,
dass der erste dieser Teilbereiche (24) im wesentlichen oval und mit seiner Längsachse vertikal ausgerichtet ist,
dass der zweite dieser Teilbereiche (25) im wesentlichen parallelflächig ausgebildet und horizontal ausgerichtet ist, und
dass der erste und der zweite Teilbereich (24, 25) so miteinander verbunden sind, dass die obere Aussenfläche des Elements (11) die relativ breite, flache und an die Mittelhände eines Fahrzeuglenkers ergonomisch angepasste Auflagefläche (26) bildet.

9. Lenkstange gemäss einem der Ansprüche 1 bis 8, dadurch gekennzeichnet,
dass für die Montage der Bremshebel (16, 17) ein Befestigungsblock (35) mit zwei Gabelbeinen (36, 37) und keilförmigen Fussbereichen vorgesehen ist, der in den Befestigungsnuten (21.1, 22.1; 21.2, 22.2) fixierbar ist.

10. Lenkstange (10) gemäss einem der Ansprüche 1 bis 9, dadurch gekennzeichnet, dass mittig mindestens ein, bevorzugt zwei Paar(e) von im Querschnitt im wesentlichen gegenüberligenden Löchern vorhanden ist bzw. sind, um stabförmige Befestigungselemente, wie Schrauben oder Nieten, durchstecken zu können, die der Befestigung der Lenkstange an der Lenkachse (13) dienen.

11. Lenkstange (10) gemäss Anspruch 10, dadurch gekennzeichnet, dass zwischen den Löchern eines Paares von Löchern durch eine zylindrische Stützwand angeordnet ist, um ein Zusammendrücken der Lenkstange zu verhindern.

12. Handgriff (14, 15) für eine Lenkstange gemäss einem der Ansprüche 1 bis 11,
dadurch gekennzeichnet,
dass der Handgriff (14, 15) als flächiges Teile mit zwei Haltestegen (27, 28) und einer Griffkante (33) ausgebildet sind,
dass der Handgriff (14, 15) mittels der Haltestege (27, 28) und der Befestigungsnuten (21.1, 22.1; 21.2, 22.2) stramm auf das Profil (11) aufziehbar ist, und
dass im montierten Zustand des Handgriffs (14, 15) dessen jeweilige Griffkante (33) nach unten weist und von den Fingern des Fahrzeuglenkers umgreifbar ist.
